# EUROPEAN PATENT APPLICATION

(11) **EP 4 835 275 A1**
(43) Date of publication of application: **04.11.2026**
(21) Application number: 26175222.4
(22) Date of filing: 28.04.2026
(51) Int. Cl.: F02C 3/22, F02C 7/16, F02C 7/224, F02K 1/82, F02C 6/06, F02C 7/143

(54) **THERMAL MANAGEMENT SYSTEM**

(30) Priority: 30.04.2025 IT 202500009624; 21.08.2025 US 202519306225
(71) Applicant: General Electric Company, Cincinnati, Ohio 45215 (US); GE Avio S.r.l., 10040 Rivalta di Torino (TO) (IT)
(72) Inventor: CLEMENTS, Jeffrey Donald, Evendale, 45241 (US); SIBBACH, Arthur William, Boxford, 01921 (US); MARTINA, Vincenzo, 10040 Rivalta di Torino (IT); SANCHEZ MORENO, Humberto, 76146 Queretaro (MX)
(74) Representative: Openshaw & Co.

(57) **Abstract**

A thermal management system (80) for a gas turbine engine (10), the thermal management system (80) includes a cryogenic fuel heat exchanger (82) comprising a working fluid inlet (96), a working fluid outlet (98), and a cryogenic fuel, a turbine cooling system (84) in fluid communication with the working fluid inlet (96) and the working fluid outlet (98), and an exhaust heat exchanger (86) in fluid communication with the working fluid inlet (96) and the working fluid outlet (98), wherein the cryogenic fuel heat exchanger (82) is arranged to receive a first heated working fluid from the turbine cooling system (84) and a second heated working fluid from the exhaust heat exchanger (86) and to provide a cooled working fluid through the working fluid outlet (98) to the turbine cooling system (84) and the exhaust heat exchanger (86). The cryogenic fuel heat exchanger (82) is configured to cool the heated working fluid with the cryogenic fuel.

## Description

### PRIORITY INFORMATION

The present application claims priority to Italian Patent Application Number 102025000009624 filed on April 30, 2025.

### FIELD

The present disclosure relates to a thermal management system for a gas turbine engine.

### BACKGROUND

A gas turbine engine generally includes a fan and a core arranged in flow communication with one another. Various accessory systems are included to ensure that the fan and/or core operate as desired. For example, a main lubrication system provides lubrication to, e.g., bearings and gear meshes within a compressor section, a turbine section, and a power gear box (if provided). In addition to the lubricating properties provided to such components, the main lubrication system removes heat from such components such that they may operate within a desired temperature range.

Other accessory systems of the gas turbine engine, such as an environmental control system, also require heat removal during operation. Accordingly, gas turbine engines typically include numerous heat exchangers, each heat exchanger dedicated to an individual accessory system of the gas turbine engine. At least certain of these individual accessory systems of the gas turbine engine require a maximum heat removal at potentially different stages of the gas turbine engine run cycle.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a schematic view of a gas turbine engine with a thermal management system.
FIG. 2 is a block diagram of the thermal management system of FIG. 1.
FIG. 3 is a diagram of a method for operating the gas turbine engine of FIG. 1.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a", "an", and "the" include plural references unless the context clearly dictates otherwise.

As used herein, the terms "first," "second," "third," and other ordinals are used to distinguish one component from another and are not intended to signify location or importance of the individual components.

As used herein, a "cryogenic" fuel is a fuel that has a boiling point below negative 25 degrees Celsius or 248 Kelvins (-25°C, 248 K) at a pressure of 1 atmosphere. Cryogenic fuels are typically cooled and pressurized into a liquid state for storage and use in an aircraft. Cryogenic fuels may include, but are not limited to, liquid hydrogen, ammonia, liquid oxygen, liquified natural gas, liquid methane, among others.

The present disclosure is generally related to using a cryogenic fuel, such as liquid hydrogen, ammonia, or liquid oxygen as a heat sink to cool components of a gas turbine engine. In particular, for fixed flow path temperatures, the level of cooling flow may be reduced by extracting heat from the cooling flow. Typically, this may be performed by transferring heat to a liquid fuel prior to combustion, such as jet fuel. Such transfer is limited to the heat capacity of the jet fuel.

Because cryogenic fuels, such as liquid hydrogen, have higher heat capacities than jet fuel, the cryogenic fuels can absorb more heat from the cooling flow. Additionally, because the cryogenic fuel is vaporized before combustion, using heat from other sources in the gas turbine engine reduces the amount of additional heat needed to vaporize the cryogenic fuel. In such a form, the size of heat exchangers used in the gas turbine engine may be reduced, and component cooling (such as turbine airfoil cooling) may be increased.

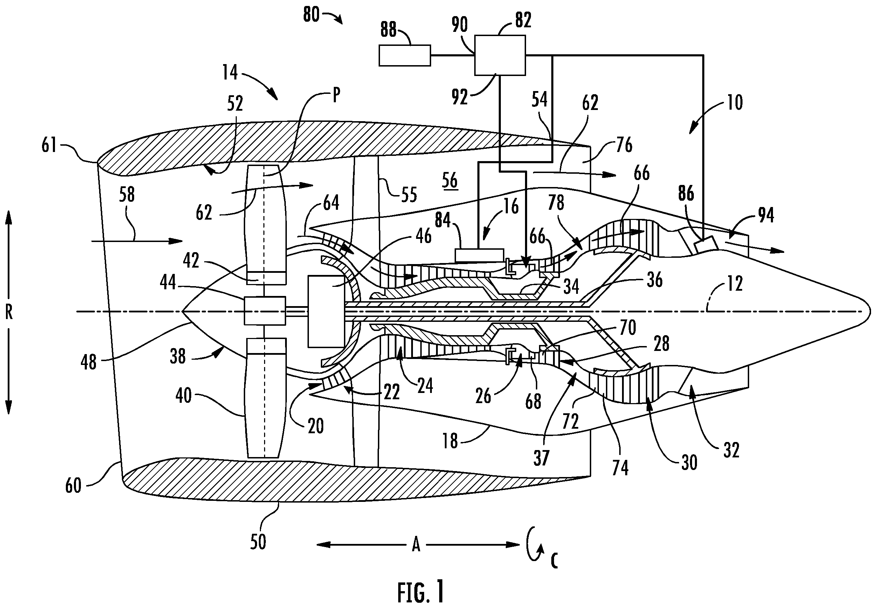

Referring now to the drawings, wherein identical numerals indicate the same elements throughout the figures, FIG. 1 is a schematic cross-sectional view of a gas turbine engine in accordance with an exemplary embodiment of the present disclosure. More particularly, for the embodiment of FIG. 1, the gas turbine engine is a high-bypass turbofan jet engine, sometimes also referred to as a "turbofan engine." As shown in FIG. 1, the gas turbine engine 10 defines an axial direction A (extending parallel to a longitudinal centerline 12 provided for reference), a radial direction R, and a circumferential direction C extending about the longitudinal centerline 12. In general, the gas turbine engine 10 includes a fan section 14 and a turbomachine 16 disposed downstream from the fan section 14.

The exemplary turbomachine 16 depicted generally includes a substantially tubular outer casing 18 that defines an annular inlet 20. The outer casing 18 encases, in serial flow relationship, a compressor section including a booster or low pressure (LP) compressor 22, a high pressure (HP) compressor 24, and a core duct between the LP compressor 22 and the HP compressor 24; a combustion section 26; a turbine section including a high pressure (HP) turbine 28 and a low pressure (LP) turbine 30; and a turbomachine exhaust nozzle 32. A high pressure (HP) shaft 34 (which may additionally or alternatively be a spool) drivingly connects the HP turbine 28 to the HP compressor 24. A low pressure (LP) shaft 36 (which may additionally or alternatively be a spool) drivingly connects the LP turbine 30 to the LP compressor 22. The compressor section, combustion section 26, turbine section, and turbomachine exhaust nozzle 32 together define a working gas flow path 37.

For the embodiment depicted, the fan section 14 includes a fan 38 having a plurality of fan blades 40 coupled to a disk 42 in a spaced apart manner. As depicted, the fan blades 40 extend outwardly from disk 42 generally along the radial direction R. Each fan blade 40 is rotatable relative to the disk 42 about a pitch axis P by virtue of the fan blades 40 being operatively coupled to a suitable pitch change mechanism 44 configured to collectively vary the pitch of the fan blades 40, e.g., in unison. The gas turbine engine 10 further includes a power gear box 46, and the fan blades 40, disk 42, and pitch change mechanism 44 are together rotatable about the longitudinal centerline 12 by LP shaft 36 across the power gear box 46. The power gear box 46 includes a plurality of gears for adjusting a rotational speed of the fan 38 relative to a rotational speed of the LP shaft 36, such that the fan 38 may rotate at a more efficient fan speed.

Referring still to the exemplary embodiment of FIG. 1, the disk 42 is covered by rotatable front hub 48 of the fan section 14. The front hub 48 aerodynamically contoured to promote an airflow through the plurality of fan blades 40. Additionally, the exemplary fan section 14 includes an annular fan casing or outer nacelle 50 that circumferentially surrounds the fan 38 and/or at least a portion of the turbomachine 16.

More specifically, the outer nacelle 50 includes an inner wall 52, and a downstream section 54 of the inner wall 52 of the outer nacelle 50 extends over an outer portion of the turbomachine 16 so as to define a bypass airflow passage 56 therebetween. Additionally, for the embodiment depicted, the outer nacelle 50 is supported relative to the turbomachine 16 by a plurality of circumferentially spaced outlet guide vanes 55. The outer nacelle 50 includes an inlet 60 at a leading edge 61 of the outer nacelle 50.

During operation of the gas turbine engine 10, a volume of air 58 enters the gas turbine engine 10 through an associated inlet 60 of the nacelle 50 and fan section 14. As the volume of air 58 passes across the fan blades 40, a first portion 62 of air is directed or routed into the bypass airflow passage 56 and a second portion 64 of air as indicated by an arrow is directed or routed into the working gas flow path 37, or more specifically into the LP compressor 22. The ratio between the first portion 62 of air and the second portion 64 of air is commonly known as a bypass ratio. A pressure of the second portion 64 of air is then increased as it is routed through the HP compressor 24 and into the combustion section 26, where it is mixed with fuel and burned to provide combustion gases 66.

The combustion gases 66 are routed through the HP turbine 28 where a portion of thermal and/or kinetic energy from the combustion gases 66 is extracted via sequential stages of HP turbine stator vanes 68 that are coupled to the outer casing 18 and HP turbine rotor blades 70 that are coupled to the HP shaft 34, thus causing the HP shaft 34 to rotate, supporting operation of the HP compressor 24. The combustion gases 66 are then routed through the LP turbine 30 where a second portion of thermal and kinetic energy is extracted from the combustion gases 66 via sequential stages of LP turbine stator vanes 72 that are coupled to the outer casing 18 and LP turbine rotor blades 74 that are coupled to the LP shaft 36, thus causing the LP shaft 36 to rotate, supporting operation of the LP compressor 22 and/or rotation of the fan 38.

The combustion gases 66 are subsequently routed through the turbomachine exhaust nozzle 32 of the turbomachine 16 to provide propulsive thrust. Simultaneously, the pressure of the first portion 62 of air is increased as the first portion 62 of air is routed through the bypass airflow passage 56 before it is exhausted from a fan exhaust nozzle 76 of the gas turbine engine 10, also providing propulsive thrust. The HP turbine 28, the LP turbine 30, and the turbomachine exhaust nozzle 32 at least partially define a hot gas path 78 for routing the combustion gases 66 through the turbomachine 16.

The gas turbine engine 10 includes a thermal management system 80 including a cryogenic fuel heat exchanger 82, turbine cooling system 84, and an exhaust heat exchanger 86. As will be explained in further detail below, the heat exchangers transfer heat from components of the gas turbine engine 10 to cryogenic fuel in the cryogenic fuel heat exchanger 82, vaporizing the cryogenic fuel from a liquid phase to a gas phase for use in the combustion section 26.

The cryogenic fuel heat exchanger 82 transfers heat from components of the gas turbine engine 10 to a cryogenic fuel, heating the cryogenic fuel for use in the combustion section 26. Specifically, the cryogenic fuel heat exchanger 82 includes a cryogenic fuel inlet 90 in communication with a cryogenic fuel source 88 and cryogenic fuel outlet 92 in fluid communication with the combustion section 26.

The turbine cooling system 84 extracts heat from a flow path of at least one of the LP compressor 22 or the HP compressor 24 and provides cool air to cool blades of the LP turbine 30 or the HP turbine 28. In particular, the turbine cooling system 84 receives hot air from one of the stages of the LP compressor 22 or the HP compressor 24, sends the hot air to the cryogenic fuel heat exchanger 82, and provides cooled air cooled by the cryogenic fuel heat exchanger 82 downstream of the LP compressor 22 or the HP compressor 24. The cooled air then cools the blades of the HP turbine 28 or the LP turbine 30. The turbine cooling system 84 is disposed upstream of the LP turbine 30 and the HP turbine 28.

The exhaust heat exchanger 86 transfers heat from an air flow in an exhaust section upstream of the turbomachine exhaust nozzle 32. As hot air exits the LP turbine 30, the exhaust heat exchanger 86 recovers heat from the hot air in an exhaust flow path 94 defined between the LP turbine 30 and the turbomachine exhaust nozzle 32. In particular, the exhaust heat exchanger 86 is disposed in the exhaust flow path 94 and to receive the hot air, heating a working fluid from the cryogenic fuel heat exchanger 82. The exhaust heat exchanger 86 then provides the heated working fluid to the cryogenic fuel heat exchanger 82.

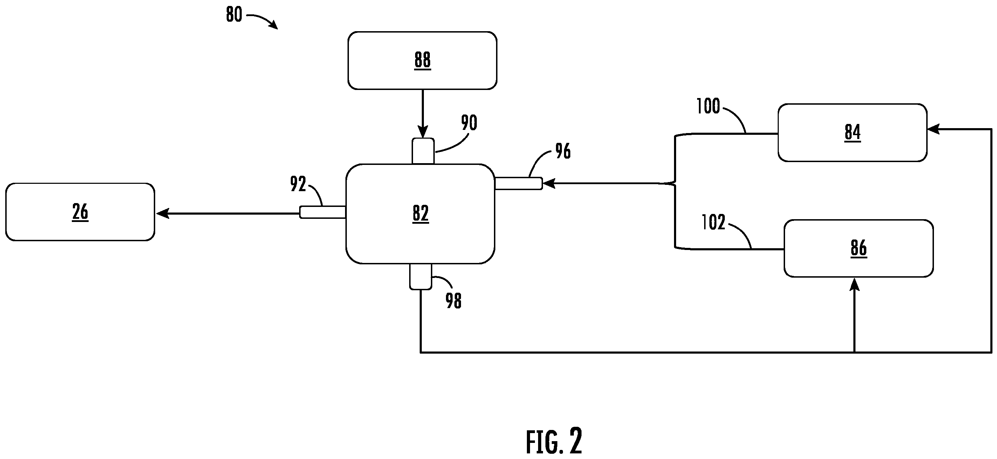

Now referring to FIG. 2, a block diagram of the thermal management system 80 of the gas turbine engine 10 is shown. The thermal management system 80 includes the cryogenic fuel heat exchanger 82, the turbine cooling system 84, and the exhaust heat exchanger 86. The thermal management system 80 extracts heat from a compressor flow path and an exhaust flow path to heat cryogenic fuel for use in a combustor of the combustion section 26 of the gas turbine engine 10. That is, the thermal management system provides heat extraction for multiple components of the gas turbine engine 10 while preparing the cryogenic fuel for combustion.

The cryogenic fuel heat exchanger 82 extracts heat from a working fluid to heat the cryogenic fuel. Specifically, the cryogenic fuel heat exchanger 82 includes a working fluid inlet 96 and a working fluid outlet 98. The cryogenic fuel heat exchanger receives a working fluid from the turbine cooling system 84 and the exhaust heat exchanger 86 in the working fluid inlet 96 and provides the working fluid the turbine cooling system 84 and the exhaust heat exchanger 86 through the working fluid outlet 98. The "working fluid" is a fluid that transfers heat between the components of the thermal management system 80. Because the cryogenic fuel heat exchanger 82 contains liquid cryogenic fuel, which is held at cryogenic temperatures (e.g., in a range from 15 K to 20 K), the working fluid is a fluid that does not condense at the cryogenic temperatures, such as dry air, nitrogen, argon, or combinations thereof. In particular, the working fluid may be air extracted from the compressor section and the exhaust of the gas turbine engine 10.

The cryogenic fuel heat exchanger 82 is arranged to receive a first flow 100 of heated working fluid from the turbine cooling system 84 and a second flow 102 of heated working fluid from the exhaust heat exchanger 86. The two flows 100, 102 of heated working fluid mix into a mixed heated working fluid that heats the cryogenic fuel in the cryogenic fuel heat exchanger 82, cooling the mixed heated working fluid into a cooled working fluid. The cryogenic fuel heat exchanger 82 provides the cooled working fluid through the working fluid outlet 98 to the turbine cooling system 84 and the exhaust heat exchanger 86. In such a form, the cryogenic fuel acts as a heat sink, cooling the working fluid for further heat transfer from the turbine cooling system 84 and the exhaust heat exchanger 86. Upon heating the cryogenic fuel, the cryogenic fuel heat exchanger provides the heated cryogenic fuel to the combustion section 26, specifically to a combustor in the combustion section 26. In particular, the cryogenic fuel may be heated to a gaseous state that can be mixed with oxygen for combustion in the combustor, reducing or eliminating the use of a dedicated heater to heat the cryogenic fuel.

The turbine cooling system 84 is fluidly connected to the working fluid inlet 96 to provide the first flow 100 of the heated working fluid to the cryogenic fuel heat exchanger 82 and to the working fluid outlet 98 to receive cooled working fluid from the cryogenic fuel heat exchanger 82. With the cooled working fluid, the turbine cooling system 84 cools components of the LP turbine 30 and/or the HP turbine 28. Specifically, the LP turbine 30 and the HP turbine 28 each include blades that thermally expand during operation, which may reduce overall output from the turbomachine 16. The turbine cooling system 84 is configured to provide cooled working fluid to the turbine blades and to receive heated working fluid from the turbine blades. Specifically, the turbine cooling system 84 is fluidly connected to the turbine blades such that the working fluid extracts heat from the turbine blades, heating the cooled working fluid into the first flow 100 of the heated working fluid. Additionally, the turbine cooling system 84 is fluidly connected to a flow path of at least one of the LP compressor 22 or the HP compressor 24, such as an exit flow path or a flow path between two consecutive stages of the LP compressor 22 or the HP compressor 24. The turbine cooling system 84 is configured to heat the working fluid into heated working fluid with heated air from the flow path.

The exhaust heat exchanger 86 is fluidly connected to the working fluid inlet 96 to provide the second flow 102 of the heated working fluid to the cryogenic fuel heat exchanger 82 and to the working fluid outlet 98 to receive cooled working fluid from the cryogenic fuel heat exchanger 82. As described above, the exhaust heat exchanger 86 extracts heat from the exit flow of the LP turbine 30 and heats the working fluid, heating the cooling working fluid into the second flow 102 of the heated working fluid. In such a form, the exhaust heat exchanger 86 is part of a waste heat recovery system, using heat from exhaust gases for other purposes, such as heating the cryogenic fuel.

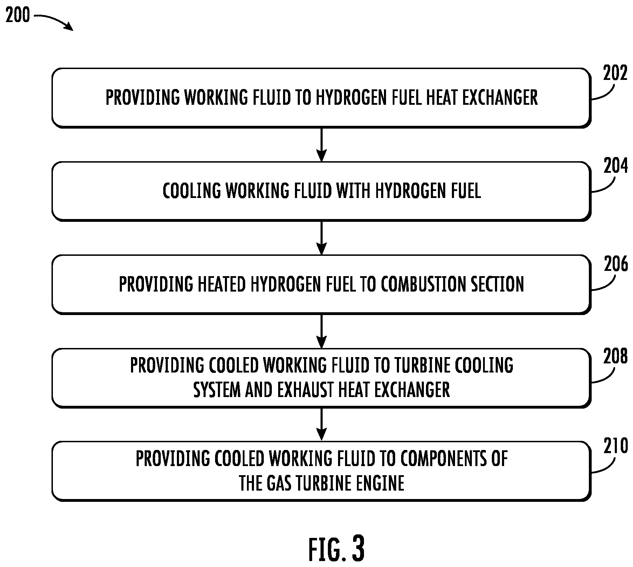

Referring now to FIG. 3, a flow diagram of a method 200 of cooling components of a gas turbine engine in accordance with an exemplary aspect of the present disclosure is provided. As is depicted, the method 200 includes at (202) providing a heated working fluid to a cryogenic fuel heat exchanger. Specifically, a turbine cooling system provides a first heated working fluid to the cryogenic fuel heat exchanger and an exhaust heat exchanger provides a second heated working fluid to the cryogenic fuel heat exchanger. The first and second heated working fluids are combined into a mixed heated working fluid.

The method 200 includes at (204) cooling the heated working fluid to a cooled working fluid with cryogenic fuel. The cryogenic fuel heat exchanger uses the cryogenic fuel as a heat sink to extract heat from the heated working fluid, cooling the heated working fluid to a cooled working fluid and heating the cryogenic fuel to a heated cryogenic fuel. Particularly, the cryogenic fuel heat exchanger can vaporize the cryogenic fuel with the heat from the heated working fluid.

The method 200 at (206) includes providing the heated cryogenic fuel to a combustion section of the gas turbine engine. The heated cryogenic fuel is provided to the combustion section for combustion, driving components of the gas turbine engine. For example, the vaporized cryogenic fuel is mixed with air in the combustion section, and the fuel/air mixture is ignited to generate high heated combustion gases exiting the combustion section to drive components of the gas turbine engine. Heated combustion gases are then exhausted to an exit flow in an exhaust section of the gas turbine engine. It will be appreciated that step (206) may occur in a different order from the other steps of the method 200, particularly when the gas turbine engine includes an additional heater to vaporize the cryogenic fuel.

The method 200 at (208) includes providing the cooled working fluid to the turbine cooling system and the exhaust heat exchanger through conventional fluid lines. The cryogenic fuel heat exchanger transmits the cooled working fluid to the turbine cooling system to cool components of the compression section and to the exhaust heat exchanger to cool components of the exhaust section. Because the cooled working fluid is cooler than the components of the compression section and components of the exhaust section, the cooled working fluid absorbs heat to become the heated working fluid.

The method 200 at (210) includes providing the cooled working fluid to one or more components of the gas turbine engine. As one example, the turbine cooling system is in fluid communication with a turbine of a compressor, and the turbine cooling system cools the turbine with the cooled working fluid. By cooling the turbine, the turbine cooling system heats the cooled working fluid into the first heated working fluid. As another example, the turbine cooling system extracts heat from a flow path of air from the compressor. As yet another example, the exhaust heat exchanger heats the cooled working fluid into the second heated working fluid by extracting heat from an air flow in the exhaust section, such as an air flow downstream of a low pressure turbine. Following the step (210), the method 200 may return to the step (202) to return the heated working fluid to the cryogenic fuel heat exchanger to heat additional cryogenic fuel.

By using a cryogenic fuel, such as liquid hydrogen, ammonia, or liquid oxygen, as a heat sink, cooling flow is improved because more heat is absorbed by the cryogenic fuel than other fuels. Absorbing heat with the cryogenic fuel also improves vaporization of the cryogenic fuel for use during combustion. In particular, vaporizing the cryogenic fuel reduces or eliminates the use of a dedicated heater or heat exchanger to heat the cryogenic fuel from a liquid state to a gas state. As such, the size of heat exchangers used in the gas turbine engine to cool components may be reduced, and component cooling (such as turbine airfoil cooling) may be increased.

Further aspects are provided by the subject matter of the following clauses:
A thermal management system for a gas turbine engine, the thermal management system including a cryogenic fuel heat exchanger including a working fluid inlet, a working fluid outlet, and cryogenic fuel, a turbine cooling system in fluid communication with the working fluid inlet and the working fluid outlet, and an exhaust heat exchanger in fluid communication with the working fluid inlet and the working fluid outlet, wherein the cryogenic fuel heat exchanger is arranged to receive a first heated working fluid from the turbine cooling system and a second heated working fluid from the exhaust heat exchanger and to provide a cooled working fluid through the working fluid outlet to the turbine cooling system and the exhaust heat exchanger, wherein the cryogenic fuel heat exchanger is configured to cool the heated working fluid with the cryogenic fuel.

The thermal management system of any of the preceding clauses, wherein the cryogenic fuel heat exchanger further includes a cryogenic fuel outlet in fluid communication with a combustion section of the gas turbine engine.

The thermal management system of any of the preceding clauses, wherein the turbine cooling system is upstream of a turbine.

The thermal management system of any of the preceding clauses, wherein the exhaust heat exchanger is disposed in an exhaust flow path.

The thermal management system of any of the preceding clauses, wherein the exhaust heat exchanger is configured to heat the cooling working fluid with an air flow downstream of a low pressure turbine.

The thermal management system of any of the preceding clauses, wherein the turbine cooling system is fluidly connected to a flow path of a compressor.

The thermal management system of any of the preceding clauses, wherein the turbine cooling system is configured to extract the first heated working fluid from the flow path.

The thermal management system of any of the preceding clauses, wherein the turbine cooling system is configured to provide the cooled working fluid downstream of the compressor and upstream of a turbine.

The thermal management system of any of the preceding clauses, wherein the turbine cooling system is configured to cool a blade of the turbine with the cooled working fluid.

The thermal management system of any of the preceding clauses, wherein the cryogenic fuel heat exchanger is configured to mix the first heated working fluid and the second heated working fluid into a mixed heated working fluid.

The thermal management system of any of the preceding clauses, wherein the cryogenic fuel is one of liquid hydrogen, ammonia, liquid oxygen, liquified natural gas, or liquid methane.

The thermal management system of any of the preceding clauses, wherein the cryogenic fuel heat exchanger is configured to vaporize the cryogenic fuel.

A method for cooling components of a gas turbine engine, the method including providing a first heated working fluid from a turbine cooling system to a cryogenic fuel heat exchanger, providing a second heated working fluid from an exhaust heat exchanger to the cryogenic fuel heat exchanger, mixing the first heated working fluid and the second heated working fluid into a mixed heated working fluid cooling the mixed heated working fluid to a cooled working fluid with a cryogenic fuel, and providing the cooled working fluid to the turbine cooling system and the exhaust heat exchanger.

The method of any of the preceding clauses, further including extracting the first heated working fluid from a flow path of a compressor.

The method of any of the preceding clauses, further including providing the cooled working fluid from the turbine cooling system downstream of a compressor.

The method of any of the preceding clauses, further including heating the cooled working fluid in the exhaust heat exchanger into the second heated working fluid with an air flow downstream of a low pressure turbine.

The method of any of the preceding clauses, wherein cooling the mixed heated working fluid to the cooled working fluid with cryogenic fuel further includes heating the cryogenic fuel with the mixed heated working fluid to form a heated cryogenic fuel.

The method of any of the preceding clauses, further including providing the heated cryogenic fuel to a combustion section of the gas turbine engine.

The method of any of the preceding clauses, further including providing the cooled working fluid to one or more components of the gas turbine engine.

The method of any of the preceding clauses, further including vaporizing the cryogenic fuel with the cryogenic fuel heat exchanger.

A thermal management system (80) for a gas turbine engine (10), the thermal management system (80) comprising: a cryogenic fuel heat exchanger (82) comprising a working fluid inlet (96), a working fluid outlet (98), and a cryogenic fuel; a turbine cooling system (84) in fluid communication with the working fluid inlet (96) and the working fluid outlet (98); and an exhaust heat exchanger (86) in fluid communication with the working fluid inlet (96) and the working fluid outlet (98), wherein the cryogenic fuel heat exchanger (82) is arranged to receive a first heated working fluid from the turbine cooling system (84) and a second heated working fluid from the exhaust heat exchanger (86) and to provide a cooled working fluid through the working fluid outlet (98) to the turbine cooling system (84) and the exhaust heat exchanger (86), wherein the cryogenic fuel heat exchanger (82) is configured to cool the heated working fluid with the cryogenic fuel.

The thermal management system (80) of any of the preceding clauses, wherein the cryogenic fuel heat exchanger (82) further comprises a cryogenic fuel outlet (92) in fluid communication with a combustion section (26) of the gas turbine engine (10).

The thermal management system (80) of any of the preceding clauses, wherein the turbine cooling system (84) is upstream of a turbine.

The thermal management system (80) of any of the preceding clauses, wherein the exhaust heat exchanger (86) is disposed in an exhaust flow path (94).

The thermal management system (80) of any of the preceding clauses, wherein the turbine cooling system (84) is fluidly connected to a flow path of a compressor.

The thermal management system (80) of any of the preceding clauses, wherein the turbine cooling system (84) is configured to extract the first heated working fluid from the flow path.

The thermal management system (80) of any of the preceding clauses, wherein the turbine cooling system (84) is configured to provide the cooled working fluid downstream of the compressor and upstream of a turbine.

The thermal management system (80) of any of the preceding clauses, wherein the turbine cooling system (84) is configured to cool a blade of the turbine with the cooled working fluid.

The thermal management system (80) of any of the preceding clauses, wherein the cryogenic fuel is one of liquid hydrogen, ammonia, liquid oxygen, liquified natural gas, or liquid methane.

A method (200) for cooling components of a gas turbine engine (10), the method (200) comprising: providing a first heated working fluid from a turbine cooling system (84) to a cryogenic fuel heat exchanger (82); providing a second heated working fluid from an exhaust heat exchanger (86) to the cryogenic fuel heat exchanger (82); mixing the first heated working fluid and the second heated working fluid into a mixed heated working fluid; cooling the mixed heated working fluid to a cooled working fluid with a cryogenic fuel; and providing the cooled working fluid to the turbine cooling system (84) and the exhaust heat exchanger (86).

The method (200) of any of the preceding clauses, further comprising extracting the first heated working fluid from a flow path of a compressor.

The method (200) of any of the preceding clauses, further comprising providing the cooled working fluid from the turbine cooling system (84) downstream of a compressor.

The method (200) of any of the preceding clauses, further comprising heating the cooled working fluid in the exhaust heat exchanger (86) into the second heated working fluid with an air (58) flow downstream of a low pressure turbine (30).

The method (200) of any of the preceding clauses, wherein cooling the mixed heated working fluid to the cooled working fluid with cryogenic fuel further comprises heating the cryogenic fuel with the first heated working fluid and the second heated working fluid to form a heated cryogenic fuel.

The method (200) of any of the preceding clauses, further comprising providing the heated cryogenic fuel to a combustion section (26) of the gas turbine engine (10).

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A thermal management system (80) for a gas turbine engine (10), the thermal management system (80) comprising:
a cryogenic fuel heat exchanger (82) comprising a working fluid inlet (96), a working fluid outlet (98), and a cryogenic fuel;
a turbine cooling system (84) in fluid communication with the working fluid inlet (96) and the working fluid outlet (98); and
an exhaust heat exchanger (86) in fluid communication with the working fluid inlet (96) and the working fluid outlet (98),
wherein the cryogenic fuel heat exchanger (82) is arranged to receive a first heated working fluid from the turbine cooling system (84) and a second heated working fluid from the exhaust heat exchanger (86) and to provide a cooled working fluid through the working fluid outlet (98) to the turbine cooling system (84) and the exhaust heat exchanger (86),
wherein the cryogenic fuel heat exchanger (82) is configured to cool the heated working fluid with the cryogenic fuel.

2. The thermal management system (80) of any of the preceding claims, wherein the cryogenic fuel heat exchanger (82) further comprises a cryogenic fuel outlet (92) in fluid communication with a combustion section (26) of the gas turbine engine (10).

3. The thermal management system (80) of any of the preceding claims, wherein the turbine cooling system (84) is upstream of a turbine.

4. The thermal management system (80) of any of the preceding claims, wherein the exhaust heat exchanger (86) is disposed in an exhaust flow path (94).

5. The thermal management system (80) of any of the preceding claims, wherein the turbine cooling system (84) is fluidly connected to a flow path of a compressor.

6. The thermal management system (80) of any of the preceding claims, wherein the turbine cooling system (84) is configured to extract the first heated working fluid from the flow path.

7. The thermal management system (80) of any of the preceding claims, wherein the turbine cooling system (84) is configured to provide the cooled working fluid downstream of the compressor and upstream of a turbine.

8. The thermal management system (80) of any of the preceding claims, wherein the turbine cooling system (84) is configured to cool a blade of the turbine with the cooled working fluid.

9. The thermal management system (80) of any of the preceding claims, wherein the cryogenic fuel is one of liquid hydrogen, ammonia, liquid oxygen, liquified natural gas, or liquid methane.

10. A method (200) for cooling components of a gas turbine engine (10), the method (200) comprising:
providing a first heated working fluid from a turbine cooling system (84) to a cryogenic fuel heat exchanger (82);
providing a second heated working fluid from an exhaust heat exchanger (86) to the cryogenic fuel heat exchanger (82);
mixing the first heated working fluid and the second heated working fluid into a mixed heated working fluid;
cooling the mixed heated working fluid to a cooled working fluid with a cryogenic fuel; and
providing the cooled working fluid to the turbine cooling system (84) and the exhaust heat exchanger (86).

11. The method (200) of claim 10, further comprising extracting the first heated working fluid from a flow path of a compressor.

12. The method (200) of any of claims 10-11, further comprising providing the cooled working fluid from the turbine cooling system (84) downstream of a compressor.

13. The method (200) of any of claims 10-12, further comprising heating the cooled working fluid in the exhaust heat exchanger (86) into the second heated working fluid with an air (58) flow downstream of a low pressure turbine (30).

14. The method (200) of any of claims 10-13, wherein cooling the mixed heated working fluid to the cooled working fluid with cryogenic fuel further comprises heating the cryogenic fuel with the first heated working fluid and the second heated working fluid to form a heated cryogenic fuel.

15. The method (200) of any of claims 10-14, further comprising providing the heated cryogenic fuel to a combustion section (26) of the gas turbine engine (10).
